# EUROPEAN PATENT APPLICATION

(11) **EP 2 595 111 A1**
(43) Date of publication of application: **22.05.2013**
(21) Application number: 12191005.3
(22) Date of filing: 02.11.2012
(51) Int. Cl.: G06Q 50/00

(54) **Computer Implemented Method of Displaying Contact Nodes in an Online Social Network, Computer Systems and Computer Readable Medium Thereof**

(30) Priority: 07.11.2011 US 201161556331 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A computer-implemented method of displaying contact information in an online social network, including displaying at a graphical user interface of a first user a plurality of visual representations of contact nodes each representing a second user or a group of second users who belong to social contacts of the first user; grouping and regrouping of second users; modifying the positions and/or sizes of the contact nodes to indicate a quality and/or a quantity of relationship between the first user and each of the contact nodes by changing the visual.

## Description

### FIELD OF THE INVENTION

The present invention relates to a computer-implemented method of displaying contact information in an online social network. In particular the present invention relates to a method of displaying contact information at an user-interface of a first user of an online social network. More particular the invention relates to a method of displaying visual representations of contact nodes each representing a second user or a group of second users who belong to the social contacts of said first user. The second users will be also referred hereinafter to "friends of the first user".

The present invention also relates to a computer system being configured for performing said computer-implemented method and further relates to a computer readable storage medium tangibly embodied thereon a program of instructions executable by a processor for performing said computer-implemented method. The method and system of the present application allows friends of a user to be displayed spatially in relation to the user based on certain information, like the frequency of online contact between the user and each friend, based on the relevance the user applies to the friendship or other such information. The user can change the size of the friend's sphere based on the user's perceived relevance of the friend, while the system database determines other parameters and displays these, like the proximity of the friend to the user based on the frequency of interaction between the two parties.

### BACKGROUND OF INVENTION

Current generation social networking sites display contacts in alphabetical lists. As such lists of friends become larger, they become unwieldy and it is difficult for a user to see with whom of the other users he/she actually spends time. In addition, users cannot quickly see whether a contact is a good friend, or simply an acquaintance. Lists of friends or contacts lack the interactive nature and capabilities of a graphical display. The relationship between one user's friends to him has many different factors that are currently not displayed in known social networks, and thus lack a natural way to interface with such interfaces.

US 2009/0024747 A1 discloses an apparatus, system and method to generate a graphical representation of a social network. The computer program product includes a computer useable storage medium to store a computer readable program that, when executed on a computer, causes the computer to perform operations related to generating a graphical representation of a social network. The operations include an operation to display a first node and a second node in a social network. The operations also include an operation to display an actual quality indicator representative of an actual level of quality of a connection between the first and second nodes of the social network. The operations also include an operation to display a target quality indicator representative of a target level of quality of the connection between the first and second nodes of the social network.

US 2005/0171955 A1 discloses a system, apparatus and method which are directed towards enabling information filtering using measures of an affinity of a relationship between subscribers of an online portal system. The affinity of a relationship may be determined based, in part, on the tracking of various online behaviors of and between subscribers of the portal system. Any of a variety of behaviors may be tracked, including message communications between subscribers, participation in instant messaging groups, purchases, activities, categories, and so forth. Such behaviors may be employed to determine a level of trust (or affinity) between subscribers of the portal system. This affinity measurement may be used to filter various information, including, but not limited to, product recommendations, ratings, polling queries, advertising, social network communications, personal ads, search results, and the like. Moreover, this affinity measurement may also be employed to perform message spam detection.

US 2009/0265604 A1 discloses a method for presenting a graphical representation of the strength or vitality of a contact's social network. When a user pulls up a graphical user interface displaying contacts in his or her social network, in addition to the traditional profile data for each contact, a virtual object may be displayed. The virtual object for a contact may be displayed in different ways, depending on the strength of the contact's social network. Thus, a user may access a contact in their social network and, by viewing the social network virtual object, quickly and easily get a sense of the strength and vitality of that contact's social network.

US 2009/0319914 A1 discloses a method for determining a relationship between participants in an on-line community based on various facts. The nature of the relationship is represented in a graphical user interface (GUI) by a visual element that shows the extent or depth of the relationship. Facets of the relationship may be used to facilitate interaction between participants (e.g., if two participants both like a particular band, then information relevant to the band may be shown as part of the UI when the participants interact with each other). The nature of the relationship may be determined or characterized based on commonality of activities, commonality of interests, the extent to which the participants have interacted with each other in the past, or other facts.

### SUMMARY OF THE INVENTION

The present application is directed to an enhanced method and system of displaying contact information in an online social network.

According to the present invention there is provided a computer-implemented method of displaying contact information in an online social network, comprising the steps of: displaying at a graphical user interface of a first user a plurality of visual representations of contact nodes each representing a second user or a group of second users who belong to social contacts of said first user; grouping and regrouping of second users; modifying the positions and/or sizes of the contact nodes to indicate a quality and/or a quantity of relationship between said first user and each of said contact nodes by changing the visual.

Thus the invention renders a graphic display that provides a way to see groups of friends and individuals in relation to one another based on the frequency of contact with the first user, and a way for the first user to set the display in a way to comfort him. The grouping and regrouping of second users can be made by the first user and the method allows that any second user can belong to two or more different groups. The visual representations of the contact nodes can be arranged around a central visual representation of the first user. The quality and/or quantity of relationship between said first user and each of said contact nodes is preferably indicated by modifying the positions and/or sizes of the contact nodes in relation to the position and/or size of the central visual representation of the first user.

The visual representation of the contact nodes and/or the central visual representation of the first user can be a circular element, in particular a circle or sphere. The quality of relationship can refer to the importance of the relationship between the first user and the particular contact node. The quantity of relationship can refer to the interactivity importance the first user and the second user or users of the particular contact node. In one embodiment of the invention, the size of the visual representation of each contact node is determined by the first user to indicate the quality of relationship with the second user or users of the particular contact node. The distance between the position of the visual representation of each contact node and the central visual representation can be determined by a computer to indicate the quantity of relationship with the second user or users of the particular contact node. In another embodiment of the invention, the size of the visual representation of each contact node is determined by the computer to indicate the quality of relationship with the second user or users of the particular contact node.

### BRIEF DESCRIPTION OF THE DRAWINGS

Hereinafter the invention will be set forth in an exemplary manner and with reference to the enclosed drawings, from which further features, advantages and technical effects achieved will become apparent. In the drawings:
- Fig. 1: is a schematic drawing of a display showing the visual representations of contacts of a first user according to a first embodiment of the invention;
- Fig. 2: is a schematic drawing of a display showing the visual representations of contacts of a first user according to a second embodiment of the invention;
- Fig. 3: is a detail part of the display shown in Fig. 2.

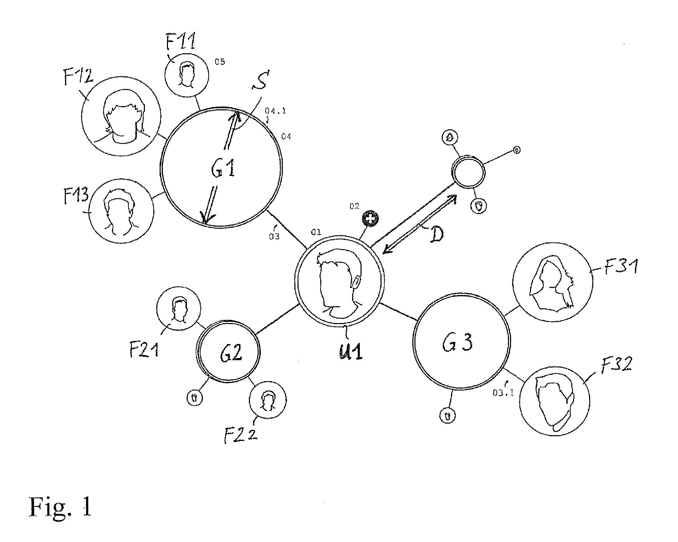

Fig. 1 is a schematic drawing of a display showing the visual representations of contacts of a first user according to a first embodiment of the invention. The display is shown on the user interface of the first user U1. The user interface can be the display of a computing device such as PC, mobile phone, PDA ort the like. The first user U1 is a registered member of a social online network which provides services for all registered members of the network, such as messaging, chat, gaming etc.. The display of Fig. 1 shows to the first user his/her contacts, i.e. all those other members of the network (second users) which have a relationship with the first user U1. Therefore these contacts are referred to as friends of the first user U1.

The invention provides a user U1 with a graphical display of his/her friends F11, F12, F13 ... F21, F22 ... F31, F32... The first user U1 can further organize his/her friends into groups G1, G2, G3.... The graphical display shows the first user U1 in the center of concentric spheres each being a visual representation of a particular friend and/or a group. This means that around the first user U1 there are spheres that either show friends or groups of friends. In case of groups each group sphere, e.g. sphere G1, itself has other spheres, e.g. F11, F12 and F13, connected to the group sphere, one sphere per friend of this group.

The displayed representations of friends and/or groups are variable and can be set by the user U1 in different ways. The first user U1 may create new groups, delete groups or reorganize groups according to his/her needs and demands.

In Fig. 1 the first user U1 is shown in the center of the display by a visual element 01 having a circular shape, the element may comprise a user portrait, picture, graphic or the like. The element 02 is an add button which can be activated to create a new group. In the present example there are four groups G1, G2... which have already been created, either by the user U1 or by the system, each group is shown by a sphere to which at least two contacts/friends are linked. For example the group G1 may comprise three contacts/friends F11, F12 and F13. Each connection line (e.g. see line 03) between a group and the first user U1 has a length which represents the quantity of relationship. In the present example the length or distance D represents the relative amount of interaction with that particular group (e.g. G1), determined by the system.

The connection lines (see e.g. line 03.1) between a group (e.g. G3) and the corresponding second users (i.e. friends F31, F32...) may not represent a quantity and/or quality of relationship, but simply shows that the particular user (e.g. F32) belongs to this group G3. However, the size of each user sphere (e.g. of user F31) may represent the quantity and/or quality of relationship, set by the first user U1 or by the system. For example the user U1 may consider to have a closer relationship with friend F31 than with friend F32; thus the size of the F31 sphere is larger than the size of the F32 sphere.

Each group may be represented by a flat sphere or circle with name of group inside (e.g. see group G1). The size S of the group may be determined by an average value of corresponding sizes of user spheres F11, F12 and F13 which belong to this group G1. When a new group is created the system may outline a colored sphere (see line 04.1), wherein the size is randomly preset by system. The user U1 then can define or modify the size by himself/herself. The friends who belong to this group are each displayed by a user portrait, picture or graphic in circular shape (see e.g. sphere 05) which is connected to this group. The size of the sphere represents the relevance the first user U1 manually assigns to this user (e.g. F11).

As explained above, the Fig. 1 shows the first user U1 in the center of the display. The friends are represented by spheres. The size of the particular sphere represents the relevance of the corresponding friend (e.g. F11) to the first user U1, manually set by the user itself. This means that smaller spheres represent acquaintances or those friends that the user does not consider important. Thus the sizes of the spheres indicates the quality of relationship between user U1 and his/her friends. The sizes S of group spheres may indicate the average value of quality and thus represent the different quality levels of relationship between user U1 and the groups of friends. The distance D or proximity to the first user U1 may indicate the quantity of relationship, e.g. the amount of contact activity between a group and/or friend with the first user U1, as determined by the system.

With the help of Fig. 1 a display variation 1 will be explained as follows:
The spheres, either representing groups G1, G2... or friends F11, F12..., each have a relative distance D to the first user U1. Friends are represented as a sphere with a connecting line to the user only. The distance of each friend in relation to the user is determined by the amount of online interaction with the user. This distance is generated and updated automatically by the computer system.

The user U1 is able to change the size of friends' spheres, indicating the importance of the friend on a personal level. This means that certain friends who are very important will typically have a large sphere, but may in fact be placed spatially far away from the user. This can, for instance, alert the user U1 to the fact that he/she is spending less time with a friend that is in fact quite important or more time with a friend considered less important.

Another display variation 2 may be as follows:
This version simplifies the display and is a quick view for the user U1 who does not want to manually change anything. The system represents every friend and group of friends as a sphere around the user in the center. Every friend's of group's sphere is as big as the system interprets the relevance of the friend of group to the user. The distance D from the user U1 to the friend of group is of no importance here.

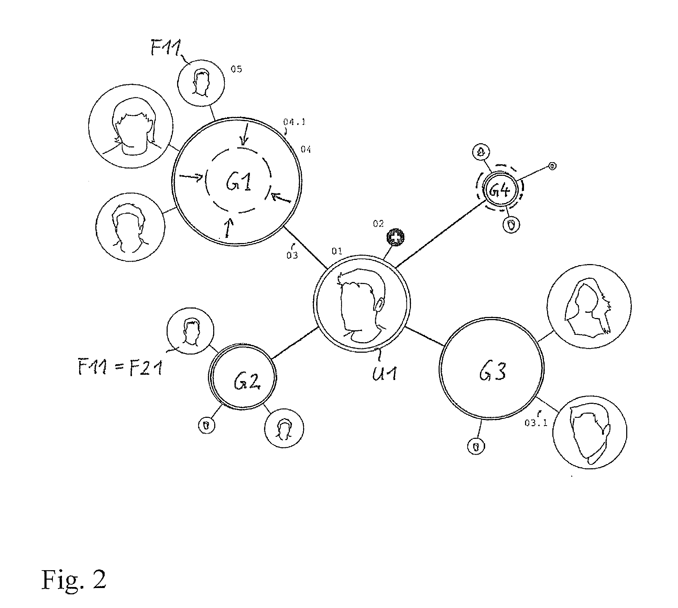

Fig. 2 shows a similar example of a display such as shown in Fig.1. But here in Fig. 2 the system may determine and change the sizes of spheres automatically. In particular the size of a friend's sphere represents the amount of interaction between first user U1 and the particular second user (e.g. F11) within the group G1. Moreover the size of a group sphere represents the average amount of interactions between first user U1 and all second users within the group G1.

The Fig. 2 also shows a possible rendering of the friends view. The distance from any sphere to another is chosen by the system for better visibility, the size of the spheres show their relevance of the friend or group to the user based on their joined interaction.

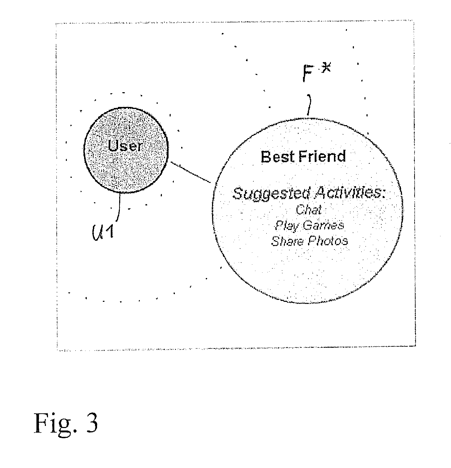

Fig.3 shows a close-up view of the first user U1 and his/her best friend F*. The friend's sphere suggests activities to which both users have access.

With the help of the Figs. 1 to 3 the functionality of the method and system will now be described in more detail:
The method and system offers the function of zooming in on individual friends or groups which provides the user U1 with information about that friend (e.g. F* in Fig. 3), as well as suggestions for common interest activities that are shared with the friend. The user U1 can then contact the friend directly through the contact information. The user U1 can change settings that organize the access to the content and information of a user's profile and to content the user owns. The user U1 is able to limit the access to specific users or groups - these users / friends can access the data, but cannot forward the permission to other users that do not have an original permission by the content/ data owner.

With friends organized in groups, the user U1 can see the spatial relation of various groups of friends to themselves as well. Zooming in provides information about the friends contained in the group. Examples of the types of groups that could be maintained are: Gaming Clan, Family, Social Club, School Friends, Work, etc. F

Friends and groups are displayed as spheres. The graphical display can be zoomed in and out in order to display the contacts in a single group, as well as to display specific information about single contacts or groups.

The user U1 can interact with the display by zooming in and out of the graph, and editing groups and friends displayed in the graph.

In particular the following functions are provided:

### Group Sharing

A user U1 can create a group of users/friends to organize all his friends. By default this group is not shared and is a private organization tool for the creating user. For a created group the user U1 can change the sharing status in the following ways:
i) Keep it private, the group is only visible and reachable for the user. No other user/friend can search or find the group.
ii) Share the group to all group members (second users belonging to this group). Now everyone in the group can see the group itself and the other members in that specific group. Depending on further settings the group member might be able to further forward the group to non-members.
iii) Share the group to the public (all second users). Now everyone in the network has access to the group (e.g. can find it with a search query). Depending on the further settings anyone can now join the group (either direct, by confirmation, etc.) Sharing a group to the public opens it content, e.g. the users of the group, with the whole social network.
iv) Share the group to targeted other users (selected second users). The owner of the group can share the group with specific other users that are either part of the group or not part of the group. Depending on the settings the users who have access might be able to further share the group to other users.

### Visibility of the shared group

If a user gets access to a group of another user (both are connected already) the shared group will appear in his/her friends view, connected via the user who shared the group to him.

If a group is shared to a user who is not yet connected with the group owner, the group does not automatically appear in his friend view, but he is now able to search and find it. This is the typical use case for a public group that is shared with the whole network and is thus available to everyone to find.

### Creating a profile for the group

The user (e.g. U1) who has the managing right of the group (most times the creator) can create a profile for that group. A group profile is like changing the group into a virtual user. With a profile the group can be addressed, searched, followed, etc. similar to the functions of a normal user profile. Privacy settings, as mentioned above, still apply to the group with or without a profile, e.g. a group profile can be limited in its access to the creator, certain users, the users of the group or to the public.

The administration rights of a group can be shared to other users, either temporary or permanent. Group profiles have different values for its creator, the assigned manager and its members.

### Merging two or more groups

It happens that different users create similar groups. For example two or more members of the same football club create their own group for their friends of that club. After one member shares his group to the other members some users will have very similar groups that create more confusion than help structuring the friends view. For these cases the creators of these similar groups can merge their groups to one combined group. For this action one group will be merged with another. Duplicate members will be eliminated, while the administration rights stay at one user (the creator that owns the group that has other groups merged into his).

### Embedding groups

Instead of merging groups can be embedded into other groups. This is done by dragging and dropping one group into the other.

As will become apparent to the person skilled in the art the method according to the present invention provides a friend's view with added visibility of contact information to a user being a registered member of a online social network. The user may see at a glance how the relationship to his/her friends is. The user may create and rearrange groups of friends.

While various embodiments have been described above, it should be understood that they have been presented by way of example only, and not limitation. For example, any of the elements associated with the social network engine may employ any of the desired functionality set forth hereinabove. Thus, the breadth and scope of a preferred embodiment should not be limited by any of the above-described exemplary embodiments.

## Claims

1. A computer-implemented method of displaying contact information in an online social network, comprising:
displaying at a graphical user interface of a first user a plurality of visual representations of contact nodes each representing a second user or a group of second users who belong to social contacts of said first user;
grouping and regrouping of second users;
modifying the positions and/or sizes of the contact nodes to indicate a quality and/or a quantity of relationship between said first user and each of said contact nodes by changing the visual.

2. The computer-implemented method of claim 1, wherein the grouping and regrouping of second users is made by the first user and wherein the method allows that any second user can belong to two or more different groups.

3. The computer-implemented method of claim 1 or 2, wherein the visual representations of the contact nodes are arranged around a central visual representation of the first user.

4. The computer-implemented method of claim 3, wherein the quality and/or quantity of relationship between said first user and each of said contact nodes is indicated by modifying the positions and/or sizes of the contact nodes in relation to the position and/or size of the central visual representation of the first user.

5. The computer-implemented method of claim 1 or 3, wherein the visual representation of the contact nodes and/or the central visual representation of the first user include a circular element, in particular a circle or sphere.

6. The computer-implemented method according to one of the preceding claims, wherein the quality of relationship refers to the importance of the relationship between the first user and the particular contact node, and/or
wherein the quantity of relationship refers to the interactivity importance of the first user and the second user or users of the particular contact node.

7. The computer-implemented method according to one of the preceding claims, wherein the size of the visual representation of each contact node is determined by the first user to indicate the quality of relationship with the second user or users of the particular contact node.

8. The computer-implemented method of claim 1 or 7, wherein the distance between the position of the visual representation of each contact node and the central visual representation is determined by a computer to indicate the quantity of relationship with the second user or users of the particular contact node.

9. The computer-implemented method according to one of the preceding claims, wherein the size of the visual representation of each contact node is determined by a computer to indicate the quality of relationship with the second user or users of the particular contact node.

10. The computer-implemented method of claim 1, wherein the method further comprises:
zooming in on a contact node;
providing the first user (U1) with information about said contact node; and/or
providing suggestions for common interest activities that the first user (U1) shares with said contact node.

11. The computer-implemented method of claim 1, wherein the method further comprises:
assigning to a group a sharing status indicating:
that this group is kept private by being only visible and reachable for the first user (U1), or
that this group is opened to be shared to all second users who belong to said group, or
that this group is made public to be shared to all second users of the network, or
that this group is opened to be shared to a selection of second users either belonging to said group or not.

12. The computer-implemented method of claim 1 or 11, wherein the method further comprises:
creating a profile for a group, wherein the profile comprises the functionality of a personal user profile, in particular the functionality of being addressable, searchable,
and or followable within the online social network,
wherein the method preferably further comprises:
assigning at least to the first user (U1) administration rights to create and/or
modify and/or delete a group and/or a profile for a group.

13. The computer-implemented method of claim 1, wherein the method further comprises:
merging two or more groups being created by at least two different users, and/or
embedding groups by dragging and dropping one group into another group.

14. A computer system for running a social network consisting of a plurality of users, said computer system being configured for performing the computer-implemented method as claimed in any of the preceding claims.

15. A computer readable storage medium tangibly embodied thereon a program of instructions executable by a processor for performing the computer-implemented method as claimed in any of the claims 1 to 13.
